Europäisches Patentamt

European Patent Office

Office européen des brevets

(19)

(11) Publication number: **0 302 844**
**A2**

# EUROPEAN PATENT APPLICATION

(12)

(21) Application number: 88850149.1

(22) Date of filing: 29.04.88

(51) Int. Cl.⁴: **G 06 K 19/06**

(30) Priority: 05.08.87 SE 8701906

(43) Date of publication of application:
08.02.89 Bulletin 89/06

(84) Designated Contracting States:
AT CH DE FR GB LI NL SE

(71) Applicant: **REMA CONTROL AKTIEBOLAG**
**Box 19036**
**S-720 19 Västeräs (SE)**

(72) Inventor: **Larsson, Stig**
**Sörbyvägen 22**
**S-722 33 Västeras (SE)**

**Söderholm, Sören**
**Kvarnbacksvägen 8**
**S-722 33 Västeras (SE)**

(74) Representative: **Klauber, Tomas**
**Patentbyran Klauber & Co. AB Kungstensgatan 48**
**S-113 59 Stockholm (SE)**

(54) Method and device for projecting an indication mark on a visually inspected object.

㊷ A luminous spot (F') produced with the aid of a light source (11) and a mask (14A), is projected on the inspected object (21). The luminous spot (F') surrounds the mark proper (M') which is darker than the luminous spot and which was produced by a screening element mounted in the mask. An improved light contrast is achieved for reading under varying light conditions.

Fig. 2

EP 0 302 844 A2

# Description

## Method and device for projecting an indication mark on a visually inspected object

The invention relates to a method for projecting an indication mark on a visually inspected object, in particular a piece of timber which shall be cross-cut, and to a device for performing the method.

In the saw mill industry, elongated pieces of timber such as trunks, blocks, boards etc, are often visually inspected in order to decide where the piece of timber should be cross-cut so that, among other things, defective spots be cut away with least possible waste. A quality inspector moves an indication mark along the piece of timber by activating an operating means (operating lever, roller ball, press buttons, or the like) and when the indicating mark strikes a border line between different grades, or a proposed cross-cutting location, the quality inspector activates a control means, such as a push button or the like, whereupon the respective location is registered in an attached computer unit. When the respective piece of timber then leaves the control station and arrives at a cutting station, cross-cutting occurs at the selected location. Methods and devices for registering a selected cross-cutting location or a border line between different grades, and for moving a piece of timber into a correct cutting position are known, and lie outside the scope of the present invention.

A known method for producing an indication mark of the kind aforesaid which may be moved along the inspected object, is to project a luminous line on the object and to have it moved there-along in dependence on the movements of the operating lever, e.g. by having the light beam, by which the luminous line is generated, reflected on a mirror which may be rotated in accordance with the movements of the operating lever. A method and a device of this kind is described e.g. in SE-B-402 231. Such a luminous line must be sufficiently bright for to be distinctly seen, and at the same time, in order to enable marking the suf-ficient accuracy, the line must not be too thick. These are two partially contradictory requirements, and they can be partially met by using a very strong light source, which however, due a great generation of heat, may call for special cooling arrange- ments.

Light conditions, under which a visual control of pieces of timber takes place, may vary a great deal, between e.g. the case of controlling outdoors, in full sunshine, a board of a very bright kind of wood, to controlling indoors a trunk with dark bark. It will be readily understood that the light contrast which may be achieved by a luminous line, and which can be quite satisfactory in the last named case, may be quite insufficient in the first named case.

It is an object of the present invention to provide a method and a device which in most cases occurring in practice brings about an optimal luminous contrast between the mark itself and the surrounding parts of the inspected object. The invention is characterized by features indicated in the enclosed patent claims, and it will be now explained more in detail with the aid of the accompanying diagrammatical drawings, in which

Figs. 1 to 3 show three different embodiments of a device according to the invention, the inspected object being shown, for clarity, rotated through 90° about its longitudinal axis,

Fig. 4 shows at a larger scale the masks in the devices of Figs. 1 to 3, and

Fig. 5 shows an alternative embodiment of the device of Fig. 3.

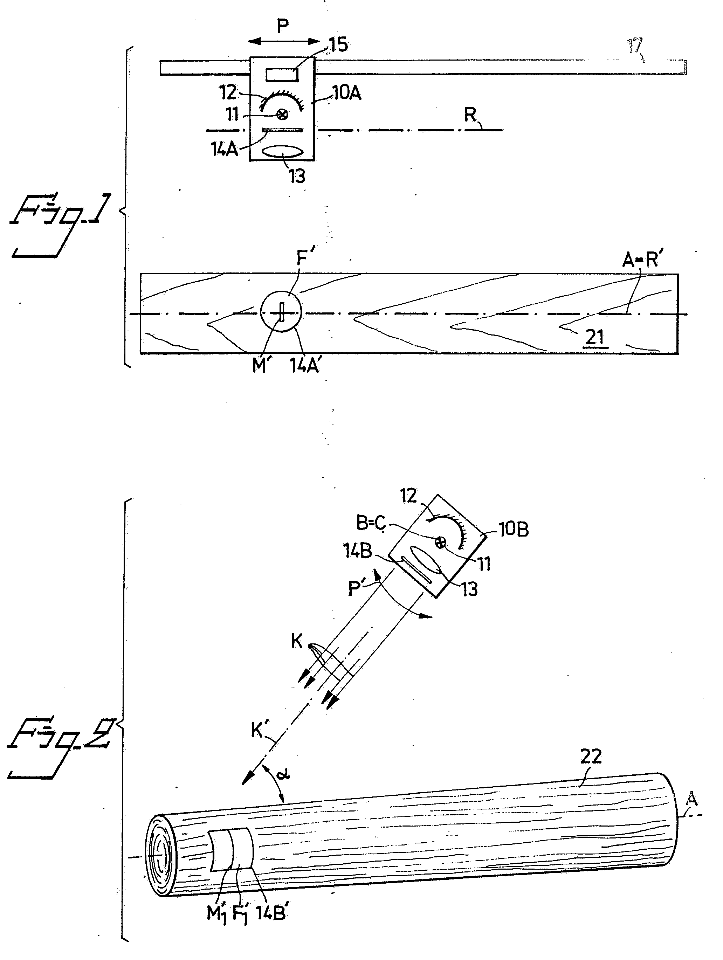

According to Fig. 1, a board 21, having a longitudinal axis A, has to be inspected. A marking device 10A is mounted above the board 21. For simplicity, the axis A is supposed to lie in the inspected surface of the board 21. In a manner known per se, and not shown in the drawing, the marking device 10A may be, e.g. with the aid of a servomotor and a pulling line, moved along an elongated guide rail 17 in both senses of the arrow P in dependence on the movements of an operating lever, also not shown, by which the servomotor is controlled and which in its turn is operated by a quality inspector.

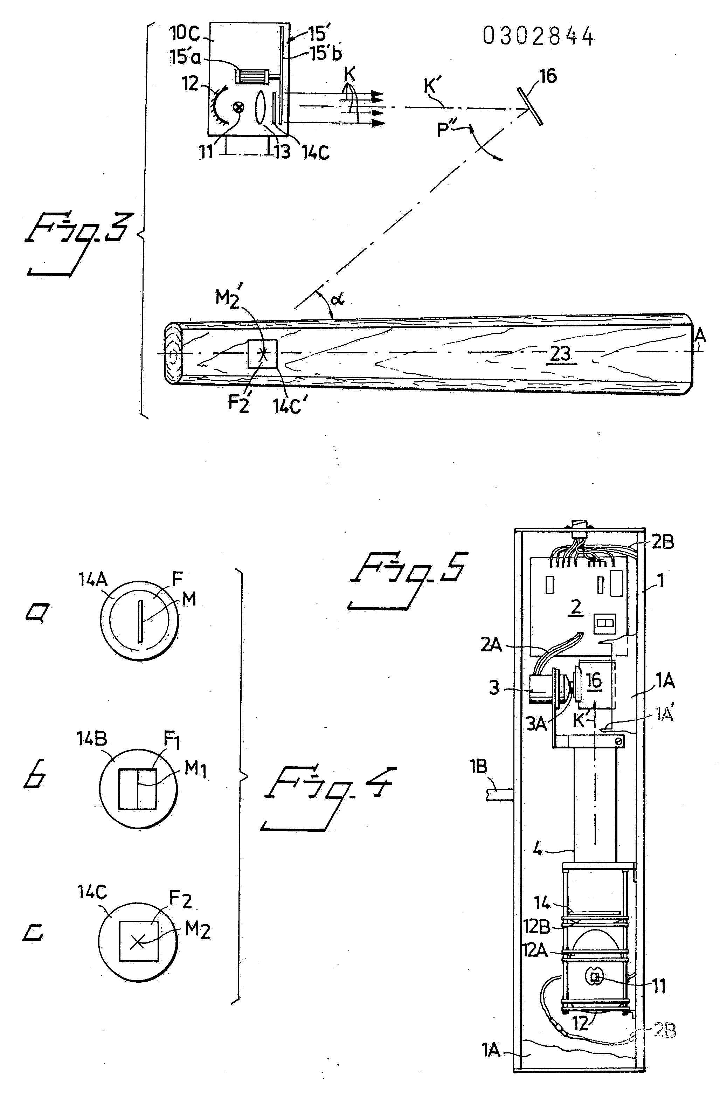

The marking device 10A comprises a light source 11, a first optical element with collecting (convergent) effect, in the instance a concave mirror 12 operating as a light reflector, a second optical element with collecting (convergent) effect, in the instance a convergent lens 13 operating as a projection objective, and a mask 14A which is shown more in detail under a) in Fig. 4, and which is located in an object plane R of the lens 13, which plane is conjugated with an image plane R' coinciding with the upper surface of the board 20A.

The mask 14A comprises a circular window F which is covered by a colourless, transparent foil in the centre of which is mounted (e.g. pasted) a narrow stripe M of a suitably (e.g. red) coloured foil or the like. The indication mark 14A' which is projected on the board 21 consists then of a bright circle F' corresponding to the window F in the mask 14A, and of a coloured stripe M' located in the center of the circle F' and corresponding to the coloured foil M by which the passing light has been "coloured", i.e. filtered. The size of the indication mark 14A' is established in known manner by selecting the dimensions of the mask 14A and the optical parameters of the lens 13. The pasted foil may also be non-transparent.

In the electrical supply line of the light source 11, which otherwise is not shown, is an interrupter means 15 connected which periodically interrupts the current, e.g. with a frequency of 0.1 to 5 Hz. The indication mark 14A' on the board 21 becomes thereby still more distinctive, because it flashes.

According to Fig. 2, a trunk 22 is inspected with the aid of a marking device 10B which comprises the same constituent parts 11 and 12 as the device 10A. However, the mask 14B has another configuration, viz. according to b) in Fig. 4, with a rectangular window $F_1$ which may be without any "glazing" at all and which in the middle is transversed by a straight wire $M_1$. Moreover, the mask 14B is located elsewhere relative to the lens 13, viz. on the opposite side of this lens than where the light source 11 is. The light source is located in the object focus B of the lens 13, so that the lens 13 operates as a collimator from which issues a beam K of parallel rays. The beam K has an axis K' and is at its periphery screened by the mask 14B and in the middle by the wire $M_1$. The term "projecting" includes in the present description and in the attached patent claims also this way of transferring the mark on the inspected object, even if it differs from the conventional manner of projecting shown in Fig. 1.

The device 10B is mounted stationarily, but it can be rotated in both senses of the narrow P' about an axis C which passes, at right angles to the drawing plane, e.g. through the focus B. An indication mark 14B' which comprises a luminous spot $F_1$ and a dark luminous line $M_1'$ defining the indication mark proper, will be observed on the trunk 22.

According to Fig. 3, a block 23 is inspected with the aid of a marking device 10C which comprises the same constituent parts 11 and 12 as the devices 10A and 10B, and further a mask 14C. The mask 14C and the lens 13 are arranged in the same way as in Fig. 2, but the mask 14C has the shape shown under c) in Fig. 4, i.e. it comprises a rectangular window $F_2$ which is covered by a window pane in which cross wires $M_2$ are engraved.

The device 10C comprises an optical interrupter means 15' embodied by a non-transparent disk 15'b which is provided with one or several windows which possibly may be covered by coloured foil or the like. The disc is mounted on the output shaft of an electrical motor 15'a so that it may rotate with such velocity that e.g. the above mentioned frequency of interrupting the light beam is obtained.

The device 10C is mounted stationarily and non-rotatably. A rotatable planar mirror 16 is in known manner mounted in the path of the light beam K and may be swung in both senses of an arrow P" in dependence on the movements of an operational lever (a rotatable prism may be used instead of the mirror). An indication mark 14C', comprising a luminous spot $F_2'$ with a dark cross $M_2'$ in the middle, defining the mark itself, will be observed on the block 23.

In the embodiments of Figs. 2 and 3, where the light beam sweeps along the inspected object, while the marking device itself is stationary, a plurality of marking devices according to the invention are preferably provided in a row one beside the other in order to avoid, in extremely inclined positions of the light beam, too small angles alfa which could cause unsharpness. E.g. in an installation of measuring trunks with a length of up to 24m, and for providing them with cross-cutting marks, seven marking devices may be mounted approximately 3m above the inspected object, each marking device covering a distance of +/-1,5 m, i.e. totally 3m. All marking devices are connected to one electronic (computer) unit. The quality inspector moves by his operative lever the indication mark, produced by the first marking device, to a selected position and pushes, in known manner, a button in order to enter a quality marking into the said unit. Then the next marking device in the row is automatically connected, and marking of the next border line is done in the same way and with the aid of the same operative lever, until the whole trunk has been inspected.

Thus, whenever the quality inspector makes a marking, quality (grade) and position are fed into the electronic unit to be used there by the cross-cutting program which is stored in the unit, to establish the optimal manner in which the inspected piece of timber has to be cross-cut.

By providing a mark directly on the piece of timer, considerably more accurate marking is obtained than by gauging by eye with the aid of a mark located behind the trunk. In the case of a sweeping light beam, the mark is preferably focused at an intermediate position between the angles alfa and 90°, e.g. to the position 1,5 alfa, whereby even a possible residual unsharpness is reduced to a minimum.

In Fig. 5 is shown an example of a practical embodiment of a modified marking device of Fig. 3. The device is accommodated in a rectangular, box-shaped housing 1 which is attached, preferably articulately, to a carrier arm 1B by which it is supported e.g. 3m above the inspected object, the long side of the housing extending essentially horizontally, and the housing being turned toward the inspected object by the surface which corresponds to the drawing plane of Fig. 5.

The housing 1 has a front wall 1A which in Fig. 5 is to a great extent broken away, and which is non-transparent with the exception of a window 1A'. In the housing 1 are accommodated in particular the following constituent parts : a printed circuit card 2, a driving unit such as e.g. a servomotor 3, or a stepping motor or the like, a tube 4, a mask 14, two condenser lenses 12A, 12B, and a light source 11. Electric current is fed to the printed circuit card 2, wherefrom it is distributed, possibly after some conversion, to the separate load devices, in particular to the motor 3 and (by the line 2B) to the light source 11, which may be e.g. a halogen lamp 24V/100W, a laser light source, etc. A mirror 16 is mounted on the output shaft 3A of the motor 3 and is located behind the window 1A' in the housing wall 1A.

The motor 3 is controlled, e.g. via a line 2A, by a pulse modulated signal with a pulse width of approximately 1,2ms +/-0,2ms and imposes to the mirror 16 a full swing of apr. 28°, which means a deflection of the light beam whith the axis K', which comes out from the tube 4 and impinges on the mirror 16, of apr. 56°, i.e. apr. 28° on each side of a vertical raised e.g. in the middle of the mirror 16 at right angles to the drawing plane of Fig. 5.

It will be apparent from the described examples that according to the present invention, the luminous spot on the inspected object can be made appreciably greater, and thus much more conspicuous, than the narrow luminous line of the methods known up to now, and that no decrease of accuracy of measurement or setting occurs, because the reading or setting takes place relative a dark mark in the center of a luminous spot, irrespective of how far from the mark the edges of the luminous spot are located (i.e. how great the illuminated area is), and how sharply or not they are reproduced on the inspected object. Thus, supposing the same light source, the amount of light which meets the eye of the quality inspector is considerably greater than in the case of only an narrow luminous line as was used up to now.

It will be also appreciated that, on the one hand, the luminous spot easily can be made as large as desired, and that, on the other hand, the light, by which the luminous spot is generated, may be as well white as coloured, in the last mentioned case either by having the mask "glazed" with a coloured foil or pane or the like, or by using a light source which emits coloured light (always selecting of course a different colour for the luminous spot than for a possibly coloured mask itself, as e.g. according to Fig. 4 a).

Finally, it will be also appreciated that the invention is not limited to instances where the indication mark is moved along the inspected object, or where the inspected object is a piece of timber.

**Claims**

1. Method of projecting an indication mark on an inspected object, in particular an elongated piece of timber, characterized in that a luminous spot which surrounds a mark of lower light intensity, and/or which is generated by light with different colour than the luminous spot, is projected on the object.

2. The method of Claim 1, characterized by the mark being defined by at least one line which is quite unilluminated by the light of the luminous spot.

3. The method according to Claim 1 or 2, characterized by the luminous spot being, in a manner known per se, moved along the inspected object in the length direction thereof.

4. The method of any of the claims 1 to 3, characterized by the luminous spot and/or the mark being generated by coloured light.

5. A device for carrying out the method of any of the preceding claims, comprising a light source (11), a mask (14, 14A, 14B, 14C) which is transilluminated by the light source (11), and at least one optical element with collecting (convergent) effect, such as a convergent lens (13), characterized by the mask (14A, 14B, 14C) being provided with a larger than line-sized opening or window (F, $F_1$, $F_2$) for the passage of light, to which opening or window corresponds a luminous spot (F', $F_1'$, $F_2'$) on the inspected object (21-23), and with an element (M, $M_1$, $M_2$) which is mounted within the said opening or window, is appreciably smaller than said opening or window, and which at least partially screens off or filters light impinging thereon, and to which corresponds a mark (M', $M_1'$, $M_2'$) on the inspected object (21, 22, 23) within said luminous spot.

6. The device of Claim 5, characterized by the mask (14A) being located in the object plane (R) of one (13) of said optical elements (13) with collecting (convergent) effect, in the image plane (R') of which is located a surface of the inspected object (21).

7. The device of Claim 5, characterized by the mask (14B, 14C) being located behind (seen in the sense of the propagation of light) one (13) of said optical elements with collecting (convergent) effect which operates as a collimator.

8. A device according to one or more of the claims 5 to 7, characterized by being arranged to move, in a manner known per se, the indication mark (14A', 14B', 14C') defined by said luminous spot (F, $F_1'$, $F_2'$) and said mark (M, $M_1'$, $M_2'$) along the inspected object (21, 22, 23), either with the aid of a rotatable optical deviation element such as a mirror (16) or a prism, located in the path of the light beam (K) coming from the light source (11), or by the whole marking device (10A, 10B) being mounted for rotary movement (P') or for a translatory movement (P) parallel with the longitudinal direction of the inspected object.

9. A device according to one or more of the claims 5 to 8, characterized by comprising a means (15, 15') for intermittent interruption of the light beam, or for intermittent filtration or change of colour of the light beam.

10. A device according to one or more of the claims 5 to 9, characterized by being, for the control of long objects, mounted in a row together with at least one more identical device, and all devices being connected to one common operative means and/or one common electronic (computer) unit.

Fig.1

Fig.2

0302844